**Europäisches Patentamt**

**European Patent Office**

**Office européen des brevets**

(19)

(11) Veröffentlichungsnummer: **0 016 953**
**A1**

(12) **EUROPÄISCHE PATENTANMELDUNG**

(21) Anmeldenummer: **80100890.5**

(22) Anmeldetag: **22.02.80**

(51) Int. Cl.³: **G 01 N 15/00**

(30) Priorität: **27.03.79 CH 2824/79**

(43) Veröffentlichungstag der Anmeldung: **15.10.80**
**Patentblatt 80/21**

(84) Benannte Vertragsstaaten: **AT BE CH DE FR GB IT NL SE**

(71) Anmelder: **CONTRAVES AG, Schaffhauserstrasse 580, CH-8052 Zürich (CH)**

(72) Erfinder: **Feier, Markus, Ostring 36, CH-8105 Regensdorf (CH)**
Erfinder: **Frey, Raymond, Dr., Schweigmatt 39, CH-8055 Zürich (CH)**
Erfinder: **Marti, Ulrich, Ing. HTL, Weinbergstrasse 97, CH-8006 Zürich (CH)**

(74) Vertreter: **Köver, François, Dr. et al, Patentanwälte H. Mitscherlich K. Gunschmann, Dr. W. Körber, J. Schmidt-Evers Steinsdorfstrasse 10, D-8000 München 22 (DE)**

(54) **Zusatzvorrichtung zu einem Teilchenanalysator.**

(57) Die Erfindung betrifft eine Zusatzeinrichtung zu einem Teilchenanalysator zur Messung der Teilchenzahl innerhalb von durch verschiebbare Schwellen begrenzten Teilchengrößenintervallen. Zuführungen (41, 41a, 41b) leiten die im Fühlelement (40) erzeugten Signale zu Vergleichern (1, 2); Zuführungen (11, 21a, 21b, 31) leiten die von Vergleichsspannungserzeugern (10, 20, 30) erzeugten Vergleichsspannungen zu denselben Vergleichern (1, 2), wobei ein Bedienelement (100) die Vergleichsspannungen aus zwei Erzeugern (10, 20) gleichzeitig um den gleichen Betrag verändert und ein Umschalter (5) eine von zwei Zuführungen (21b, 31) mit einer Zuführung (21a) verbindet. Die Eingänge eines Antivalenzdiskriminators (7) sind über eine Zuführung (61) mit einem Verzögerungsglied (60) und über eine Zuführung (22) mit einem Vergleicher (2), sein Ausgang über eine Leitung (71) mit einem Impulszähler (8) verbunden.

ACTORUM AG

0016953

- 1 -

## Zusatzvorrichtung zu einem Teilchenanalysator

Die Erfindung bezieht sich auf eine Zusatzeinrichtung zu einem Teilchenanalysator zur Messung der Teilchenzahl innerhalb von durch verschiebbare Schwellen begrenzten Teilchengrössenintervallen, insbesondere zu einem Teilchenanalysator zur Analyse von Blutkörperchen, wobei der Teilchenanalysator mit Fühlmitteln ausgestattet ist, die ein der Grösse des gefühlten Teilchens entsprechendes elektrisches Signal erzeugen.

Die Analyse eines Gemisches von Teilchen verschiedener Grösse ist je nach Verteilung der vorliegenden Klassen sehr problematisch. Mit Verteilung ist in der Folge gemeint, eine diskrete Verteilung des Merkmals Körpervolumen und im engeren Sinn ein Histogramm der Häufigkeit von Körpervolumina. Im statistischen Sinn ist das Histogramm, oder die Verteilung, die Wahrscheinlichkeitsdichte, dass ein Merkmal wertmässig innerhalb eines bestimmten Intervalls liegt. Die Merkmale können verschiedener Art, beispielsweise physikalisch, chemisch, morphologisch und andere mehr sein. Ist man nur an der Teilchenzahl einer bestimmten Klasse interessiert, die idealerweise von der Verteilung anderer Klassen isoliert vorliegt, ist die Analyse eindeutig, auftretende Fehler sind meist apparativen Charakters und die Genauigkeit wird nur durch das dem System inhärente Signal/Rauschverhältnis begrenzt. Sobald jedoch Mischverteilungen vorliegen, wobei zum Beispiel gleich grosse Teilchen verschiedener Teilchenspezies oder Klassen je einer eigenen Verteilungsdichte angehören, werden Kriterien zur Trennung der überlappenden Verteilungen nötig.

Bei den bisher bekannten Teilchenanalysiergeräten greift der Mensch direkt ein, um bestimmte Bereiche einer Mischverteilung von Körpervoluminas abzutrennen. Er begutachtet das auf eine nicht näher beschriebene Weise sichtbar gemachte Verteilungsspektrum oder die daraus hergeleiteten Funktionen, und bestimmt auf Grund von ihm ausgewählter Kriterien eine "Trennschwelle", unterhalb derer beispielsweise die Teilchen entsprechend ihrer Grösse der einen und oberhalb derer die Teilchen der anderen Klasse zugeteilt werden. Die einmal gewählte Schwelle wird dem System eingeprägt, der Teilchenanalysator erkennt beispielsweise nur noch die den Teilchen zugehörigen Signale unter- oder oberhalb dieser Schwelle. Angenommen, die Signale unterhalb der Schwelle rühren von störenden Teilchen her, die Signale oberhalb der Schwelle von Teilchen, die analysiert werden sollen, so hat man in der eingestellten Schwelle einen Diskriminator für Stör- und Nutzsignale. Werden Verteilungen mehrerer Grössenklassen ausgemessen, müssen entsprechend mehr Trennschwellen ausgewählt und dem Messsystem eingeprägt werden, vorausgesetzt, dass die einzelnen Klassen genügend separiert sind, um eine Mischverteilung überhaupt noch als solche zu erkennen. Dies gilt natürlich auch für eine bimodale Mischverteilung.

Wird nun ein Teilchenanalysator für einen speziellen Zweck, das heisst für eine begrenzte Anwendung eingesetzt, sagen wir zur Blutkörperchenanalyse, so werden bei gewissen Geräteausführungen die Schwellen fest und von aussen nicht manipulierbar eingestellt, um die Teilchen, welche gezählt oder gemessen werden sollten, von den Teilchen, die man nicht in die Messung eingehen lassen will, abzutrennen.

Das Setzen von Trennschwellen in eine multimodale Verteilungskurve führt in erster Konsequenz zu gestutzten Verteilungen; der Stutzungsgrad hat einen direkten Einfluss auf das Integral über die Verteilungsdichte, beispielsweise auf das Resultat einer Zählung, und bestimmt, meist dominant, deren Genauigkeit. Dies gilt nur, wenn man es bei der gestutzten Verteilung belässt ohne sie adäquat zu korrigieren. Verändert sich die Verteilungskurve in der Umgebung einer festen Schwelle, so verändert sich durch die zu- oder abnehmende Stutzung der zu analysierenden Verteilung auch das Resultat der Analyse. Es kann bei vorangegangener Fehlplazierung der Trennschwelle genauer werden, normalerweise tritt jedoch das Gegenteil ein; das erhaltene Resultat wird, weil die Schwelle vorher meist optimal eingestellt war, schlechter. Ist beispielsweise ein Teilchenanalysator für die Volumenverteilungsanalyse und die Zählung von Erythrozyten in Menschenblut ausgelegt, das heisst, alle abgetasteten Signale von Partikeln aus einem bestimmten Teilchengrössenintervall sollen zur Messung beitragen und eine Trennschwelle soll die von Artefakten, also Partikeln, die nicht Erythrozyten sind, herrührenden Signale von der Messung ausschliessen, so kann dieser Analysator von Ausnahmen abgesehen, ohne Korrektur der Schwelle nicht zur Zählung der Erythrozyten in Tierblut verwendet werden. Ist der Signal/Rauschabstand des Teilchenanalysators ungenügend, so erfordert bereits der physiologisch mögliche Variationsbereich der Zellgrössen im Humanblut eine individuelle Anpassung der Schwelle an jede einzelne Blutprobe. Gar nicht verwenden lässt sich ein solcher Analysator zur Analyse von irgendwelchen Partikeln.

Man erkennt daraus deutlich den bezüglich einer Verteilungsfunktion sehr engen Anwendungsbereich und das bei ungenügendem Signal/Rauschabstand zudem kritische

- 4 -

Verhalten eines Teilchenanalysators mit innerhalb der
Schaltung festeingestellten Trennschwellen.

Man kann nun dazu übergehen, Teilchenanalysatoren derart
auszurüsten, dass die Trennschwelle oder -schwellen mit
Hilfe einer aussen am Gerät angebrachten Vorrichtung nach
Bedarf durch den Benützer eingestellt werden kann. Was
vorher die Aufgabe eines dafür instruierten Spezialisten
war, muss nun, in unzweifelhaft gleich guter Qualität vom
jeweiligen Benützer des Gerätes ebenfalls gefordert werden. Die sogenannten Einstellvorschriften sollen ein
sicheres "Setzen" einer gewünschten Trennschwelle dem
Benützer erlauben, ohne dass sein Eingriff die Analysenresultate verfälscht. Solche Einstellvorschriften sind
teils sehr einfacher Natur, ihre Ausführung dagegen oft
schwierig und unsicher.

So liefert die Schwellenpositionierung mit Hilfe eines
Oszilloskops, auf dem die Partikelsignale gegenüber dem
Basisrauschen der Artefakte sichtbar gemacht und durch
variieren eines Diskriminators oder Schwelle schätzungsweise separiert werden, schlecht reproduzierbare Werte.
Ein anderes empfohlenes Verfahren verlangt die Ermittlung
einer Summenverteilungskurve. Diese erhält man durch Auftragen von Zählresultaten in Abhängigkeit der Schwellenposition, wobei im Idealfall ein horizontales Segment
entsteht; das Plateau, anhand dessen die Schwelle eingestellt werden kann. Je weniger das Segment oder Plateau
von der Horizontalen abweicht und je grösser sein Bereich
ist, umso grösser ist der Signal/Rauschabstand des Analysators. In der Praxis der Blutkörperchenanalyse weist
das Plateau jedoch keinen horizontalen Abschnitt auf und
ist auch bereichsmässig eng begrenzt. Die Positionierung
der Schwelle ist aufgrund der erarbeiteten Kurve unsicher.

0016953

Dazu kommt der nicht unerhebliche Zeitaufwand für die Bestimmung der Summenverteilungskurve, zumal sie in der Blutkörperchenanalyse periodisch für Erythrozyten und Leukozyten getrennt aufzunehmen ist. Zudem sind die zu analysierenden Zellsuspensionen oft instabil, was vielen Benützern nicht bekannt ist; dadurch wird die Summenverteilungskurve verfälscht und die darauf basierende Schwellenpositionierung fragwürdig. Einen möglichen Ausweg aus diesem Problemkreis findet man in der Verbesserung des Signal/Rauschabstandes des Analysensystems; ein sensorseitiger und elektronischer Mehraufwand kann eine unterkritische Schwellenpositionierung ermöglichen. Ein anderer Ausweg ist die Schwelleneinstellung gemäss der vorliegenden Erfindung.

Durch die US-A-3,638,227 ist ein Zeichengerät bekannt, welches die Teilchen-Zählrate als Funktion der Schwellenspannung automatisch aufzeichnet. Anhand der erhaltenen Kurven werden die Schwellen nach qualitativen Kriterien gesetzt, was zu Werten führt, die schlecht reproduzierbar sind und von der Geschicklichkeit des Bedienungspersonals abhängen.

Durch die US-A-3,557,352 ist ein Zusatzgerät zu einem Teilchenzählsystem bekannt, welches durch Umwandlung von Signalen dieses Systems eine Teilchengrösse findet, die das untersuchte System in zwei Teile teilt, die eine bestimmte Beziehung zueinander besitzen. Beispielsweise kann ein Mittelwert einer Massenverteilung gefunden werden. Eine Lehre zum Auffinden des Minimums zwischen zwei benachbarten Klassen wird durch diese Erfindung nicht gegeben und ist für den Fachmann auch nicht daraus ableitbar.

Durch die FR-A-2.097.763 ist ein System zur Aufnahme von optischen Signalen und ihre Auswertung durch ein Rechnersystem bekannt. Insbesondere werden innerhalb eines vorliegenden Histogramms jene Signale detektiert, die zu einer bestimmten Klasse gehören. Das Anwendungsgebiet dieser Erfindung liegt bei der automatischen Navigation von Raumschiffen. Eine Uebertragung dieses komplexen Systems, das besonders für die Verarbeitung von optischen Signalen entwickelt wurde, auf ein Zusatzgerät, das kostengünstig und in Serie herstellbar sein soll, ist auch für den Fachmann nicht naheliegend.

Es ist die Aufgabe der Erfindung, eine Zusatzeinrichtung zu einem Teilchenanalysator zu schaffen, mit der die Unsicherheit bei der Schwelleneinstellung beseitigt wird und mit der zusätzlich eine Zählung einer zu untersuchenden Körpervolumenverteilung durch Eingrenzung der Verteilung zumindest vorbereitet wird, sodass die üblichen Fehlerquellen ausgeschlossen werden, die durch falsche Messung der Verteilung, Ermessensdifferenzen bei der Wahl der Schwelle und durch unpräzise Einstellung der gewählten Schwelle erfahrungsgemäss auftreten. Dadurch bleibt die Messicherheit und damit die Analysengenauigkeit auch bei der Bedienung durch weniger gut geschulte Benützer erhalten.

Diese Aufgabe wird durch die im Patentanspruch angegebene Erfindung gelöst.

Die Beschreibung der Erfindung erfolgt nun an einem Beispiel der Blutkörperchenanalyse und anhand der nachfolgend angegebenen Zeichnungen:

Fig. 1    zeigt das Zusammenwirken der Zusatzeinrichtung
         mit einem Teilchenzähler und der zu messenden
         Probelösung;

Fig. 2a   zeigt eine bimodale Grössenverteilung der
         Teilchen mit zwei Diskriminatorschwellen $V_1$ und
         $V_2$ im Uebergangsgebiet zweier Teilchenklassen;

Fig. 2b   zeigt die Verteilung von Fig. 2a mit ver-
         schobener Diskriminatorschwelle $V_2$ zur Erfas-
         sung einer Teilchenklasse;

Fig. 3    zeigt ein Funktionsschaubild der Zusatzeinrichtung;

Zur Analyse wird eine zweckmässig vorbereitete Probe
einer Erythrozyten und Leukozyten enthaltenden Flüssigkeit durch eine Abtastzone durchgeleitet, wobei die Abtastmittel beispielsweise elektrisch oder optisch ausgestaltet sein können. Die in der Flüssigkeit suspendierten
Teilchen werden während ihres Durchganges durch die Abtastzone abgetastet, wobei den abgetasteten Teilchen
entsprechende Impulse oder Signale unterschiedlicher
Eigenschaften in Abhängigkeit der physikalischen Eigenschaften der abgetasteten Teilchentypen erzeugt werden.

Bei der Analyse von Leukozyten besteht die zweckmässige
Vorbereitung unter anderem im Entfernen der typischerweise in 1000-fach höherer Konzentration vorliegenden
Erythrozyten mittels Hämolyse. Bei dieser Behandlung
werden die Erythrozyten spezifisch zerstört und eine
vieltausendfach höhere Konzentration von Zellfragmenten
der zerstörten Erythrozyten gegenüber den wohl morphologisch veränderten aber intakten Leukozyten liegt nun in
der zu untersuchenden Lösung vor. Diese Fragmente bilden
oder sollten es zumindest, eine andere Grössenklasse als die Leukozyten; es liegt grob betrachtet eine bimodale Mischverteilung vor. Im Idealfall ist die Verteilung der Artefakte, in diesem Fall die Fragmentpartikel, von der Verteilung der Leukozyten gut separiert und eine Trennung der beiden Verteilungen durch eine Trennschwelle führt zu einer gestutzten Verteilung der Leukozyten mit einem sehr kleinen Stutzungsgrad; eine nachträgliche Korrektur kann sich erübrigen.

Die Praxis zeigt, dass Resultate aus einer unkorrigierten, gestutzten Verteilung auch bei stärker überlappenden Mischverteilungen brauchbar sind. So ist beispielsweise in der Erythrozytenanalyse das Abweichen von einer angenäherten Normalverteilung ein Hinweis auf bestimmte pathologische Veränderungen und in graphischer Darstellung als ein weiteres Resultat der Analyse verwendbar. Die Konsequenz daraus: Klassen mit starker Abweichung von der Normalverteilung lassen sich auch mit in die Analyse eingeschalteten, meist aufwendigen Rechenverfahren nicht sicher korrigieren. Das Resultat aus einer gestutzten Verteilung zusammen mit einem Gütekriterium, zum Beispiel die Amplitude des Schwellenwertes, ist leichter zu beurteilen, als ein inadäquat korrigiertes Resultat. So wird in der Praxis auf eine Korrektur der gestutzten Verteilung üblicherweise verzichtet.

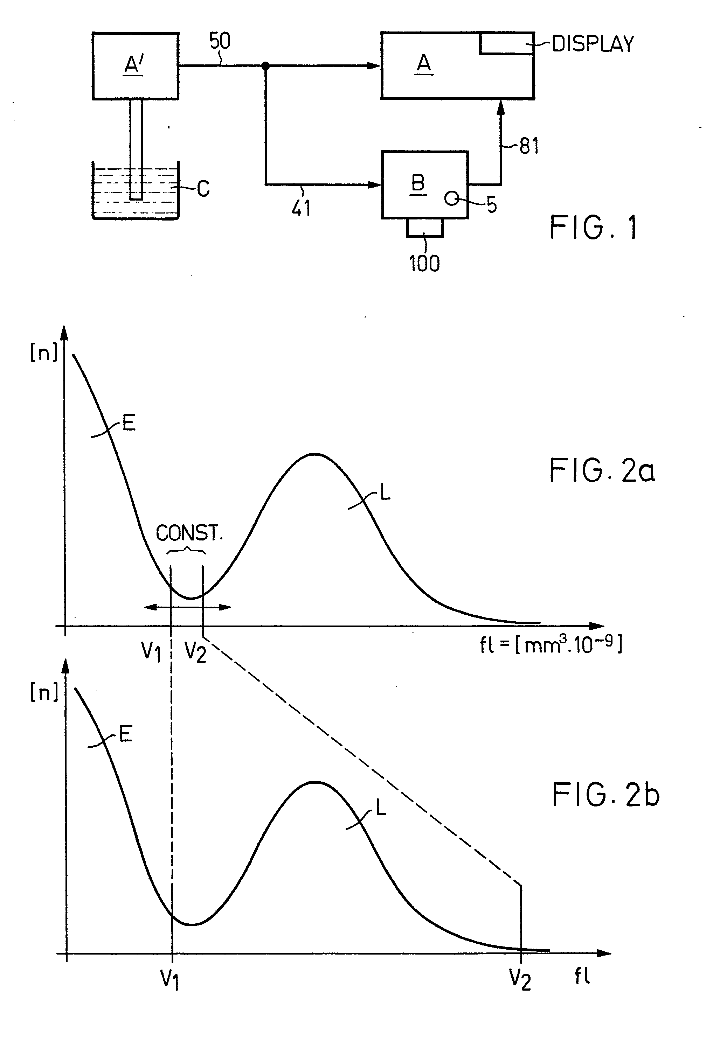

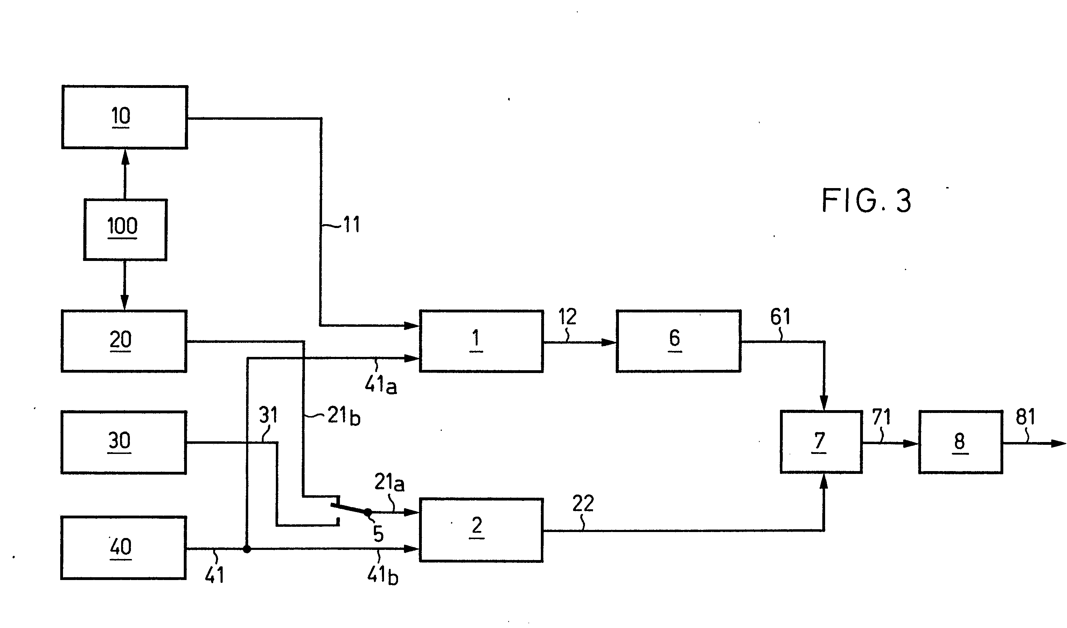

In Fig. 1 erkennt man als Blockschema einen Teilchenzähler A mit dem zugehörigen Fühlelement A', das zu Gunsten einer besseren Darstellung in eine zu untersuchende Teilchenprobe C eingetaucht dargestellt wird. Die Signalleitung 50 zwischen Fühlelement und Teilchenzähler wird von der Zuführung 41 zur Zusatzeinrichtung B abgegriffen, um die elektrischen Partikelsignale der Zusatzeinrichtung B zuzuführen. Eine Bedienungsvorrichtung 100 erlaubt die nötige Manipulation zur Einstellung der gesuchten Schwelle. Die Partikel im Gebiet der Schwelle werden gezählt und das Zählresultat mittels der Zuführung 81 zur weiteren Auswertung dem Teilchenanalysator A zugeführt. Selbstverständlich kann die Zusatzeinrichtung physisch in den Teilchenzähler inkorporiert werden, wobei einige der in Figur 3 dargestellten Funktionsteile eine doppelte Aufgabe erfüllen können. Beispielsweise können die Impulse auf der Zuführung 71 (Fig. 3) einem im Teilchenanalysator befindlichen Impulszähler zugeführt werden. Eine Umschaltvorrichtung 5 an der Zusatzeinrichtung B (Fig. 1) erlaubt als weiteres Bedienungselement eine Umschaltung von der Disziplin "Schwellensuche" auf die Disziplin "Teilchenzählung", worunter das Auszählen und Anzeigen einer gesamten zu bestimmenden Teilchenklasse gemeint ist. Die Wirkung der Bedienungseinrichtung 100 ist in Figur 2a und die Wirkung der Umschaltvorrichtung 5 in Figur 2b ersichtlich.

Fig. 2a zeigt eine typische bimodale Grössenklassenverteilung mit einem verhältnismässig gut ausgeprägten Uebergang von einer Grössenklasse zur anderen. Auf das Beispiel der Leukozytenanalyse bezogen, würde die nicht vollständig dargestellte Verteilung der Klasse E von hämolysierten Erythrozyten, also deren Fragmenten, herrühren, die Verteilung der Klasse L von den intakten Leukozyten. Die Zellbruchstücke der Erythrozyten als Partikel bilden, absichtlich herbeigeführt, eine Klasse mit einem Mittelwert der Partikelgrösse, der deutlich kleiner ist als der Mittelwert der intakten Leukozyten. So lassen sich die Artefakte (Erythrozytenfragmente) durch Setzen einer Schwelle von den zu analysierenden Leukozyten abtrennen.

Die Trennschwelle wird nun an den tiefsten Punkt im Tal zwischen beiden Klassen gesetzt. Das erfolgt, wie vorher schon beschrieben, in indirekter Form über eine Summenverteilungskurve und in direkter Form mit Hilfe eines Oszilloskops, wobei bei letzterem, ohne zu zählen, auf einen visuellen Eindruck minimaler Impulszahl derjenigen Impulse abgestellt wird, die über die simultan abgebildeten Impulse des "Artefaktrauschens" hinausragen.

Es ist wohlbekannt, dass der Mensch die Anzahl der Elemente einer Menge am sichersten erfasst, wenn diese in expliziter Form vorliegt (zum Beispiel die Mengenangabe in Form der Aufschrift 500 Schrauben pro Schachtel). Das erfinderische Vorgehen geht von dieser Erkenntnis aus und liefert für die Trennschwelle eine zahlenmässige Angabe anstelle der bisher üblichen diagrammatischen Darstellung.

Nach Figur 2a und auch 2b ist die Partikelmenge pro Volumeneinheit der Probe im Tal zwischen den beiden Verteilungen, also zwischen den beiden Schwellen $V_1$ und $V_2$ am kleinsten. Wird nun mittels des Umschalters 5 die Differenz $V_2-V_1$ sehr klein gemacht, d.h. der Partikel-Grössenbereich soll klein sein, was hier den Positionen in Figur 2a entsprechen würde, und anschliessend mit Hilfe der Bedienungsvorrichtung 100 die Schwellen $V_1$ und $V_2$ gleichzeitig über den Partikelvolumenbereich verschoben - durch einen doppeltgerichteten Pfeil dargestellt -, so kann man in willkürlich gewählten Positionen eine kurze Partikelzählung eines jeweils gleichgrossen Probevolumens durchführen; die ermittelte Zahl wird dabei in einem Display direkt angezeigt. Dies entspricht der expliziten Darstellung der Anzahl Elemente einer Menge. In der Praxis dauert eine derartige Zählung einige Sekunden. Durch systematisches Verschieben und Zählen in Richtung kleinerer Zählwerte wird sehr rasch, sicher und mit geringem Beobachtungsaufwand die Talsohle aufgefunden, das heisst, die Stelle, bei der der Fehler durch Stutzung am geringsten ist. Mit zunehmender Uebung im Umgang mit der Zusatzvorrichtung ist durch Verschieben des Schwellenpaares $V_1$ , $V_2$ während der Zählung die Zählrate Partikel/Zeiteinheit beobachtbar; auf diese Weise lässt sich der Zeitaufwand zum Aufsuchen einer Schwelle weiter verringern.

Anschliessend wird mittels des Umschalters 5 die Schwelle $V_2$ um einen solchen Betrag verschoben, dass sie nach Erfahrungswerten die Verteilung der Leukozyten einschliesst (Fig. 2b) und eine Analysenzählung durchgeführt werden kann. Zur besseren Darstellung sind die beiden Schwellen $V_1$ und $V_2$ in Figur 2a unverhältnismässig weit voneinander distanziert eingezeichnet, deswegen erscheint dann auch die untere diskriminierende Schwelle $V_1$ in Figur 2b in den Artefaktbereich verschoben. Wünscht man beispielsweise eine weiter erhöhte Genauigkeit der Schwellenposition, so kann durch einen zusätzlichen Schaltkontakt in der Zuleitung zum ersten Vergleicher auf eine weitere Vergleichsspannung, die Schwelle $V_1$ - gleichzeitig mit dem Verschieben der Schwelle $V_2$ - um den halben Betrag $V_2-V_1$ in Richtung höherer Partikelvolumengrössen verschoben werden.

Ist die Schwelle zu Beginn einer analytischen Mess-Serie einmal gesetzt, so kann bei jeder neuen Messung von Blutproben derselben Spezie innerhalb von Sekunden festgestellt werden, ob die Schwelle noch am richtigen Platz ist oder ob eine Korrektur angebracht werden soll. Als weiteres Hilfsmittel zur Einstellung der Schwelle am Beginn einer Mess-Serie mit unbekannter Verteilung erwies sich beim systematischen Verschieben des Schwellenpaares Richtung niedrigerer Zählwerte eine simultane akustische Anzeige, beispielsweise ein kleiner Lautsprecher. Der Effekt ist ähnlich wie bei einem Geigerzähler, es wird ein integraler Eindruck der Menge der Partikelimpulse erzeugt und zusammen mit der expliziten Mengenanzeige ergibt sich eine Redundanz, die der Mess-Sicherheit zugute kommt. Die schon erwähnte Minimierung der Zählrate wird mit Hilfe dieser akustischen Anzeige noch weiter erleichtert.

Figur 3 zeigt die Zusammenschaltung von Funktionsteilen zur Ausführung der beschriebenen Zusatzeinrichtung. Die genaue Beschreibung des Blockschaltbildes mit den entsprechenden Positionszahlen ergibt sich im wesentlichen aus dem Patentanspruch.

0016953

Patentanspruch:

1. Zusatzeinrichtung zu einem Teilchenanalysator zur Messung der Teilchenzahl innerhalb von durch verschiebbare Schwellen begrenzten Teilchengrössenintervallen, insbesondere zu einem Teilchenanalysator zur Analyse von Blutkörperchen, wobei der Teilchenanalysator mit Fühlmitteln ausgestattet ist, die ein der Grösse des gefühlten Teilchens entsprechendes elektrisches Signal erzeugen, gekennzeichnet durch die Zusammenschaltung folgender Funktionsteile:

a) einem ersten Vergleicher (1) mit einer Zuführung (41a) für das elektrische Signal eines Fühlelements (40) und einer weiteren Zuführung (11) einer ersten Vergleichsspannung aus Mitteln (10) zur Erzeugung dieser Vergleichsspannung,

b) einem zweiten Vergleicher (2) mit einer Zuführung (41b) für das elektrische Signal des Fühlelements (40) und einer weiteren Zuführung (21a, 21b) einer zweiten Vergleichsspannung aus Mitteln (20) zur Erzeugung dieser Vergleichsspannung,

c) Mittel (100) zum gleichzeitigen Verändern der ersten und der zweiten Vergleichsspannung um den gleichen Betrag,

d) Mittel (30) zur Erzeugung einer dritten Vergleichsspannung und

e) ein Umschalter (5) in der Zuführung (21a, 21b) der zweiten Vergleichsspannung zum zweiten Vergleicher (2) zur Umschaltung auf eine Zuführung (31, 21a) aus den Mitteln (30) zur Erzeugung der dritten Vergleichsspannung, sowie

f) Mittel (6) zur Verzögerung des Ausgangssignals auf der Zuführung (12) aus dem ersten Vergleicher (1) und

g) Mittel (7) zur Diskriminierung einer Antivalenz
   mit einer Zuführung (61) aus dem Verzögerungsglied
   (6) und einer weiteren Zuführung (22) aus dem
   zweiten Vergleicher (2), sowie einem

h) Impulszähler (8) mit einer Zuführung (71) aus dem
   Antivalenzdiskriminator (7).

FIG. 1

FIG. 2a

FIG. 2b

FIG. 3

0016953

**Europäisches Patentamt**

# EUROPÄISCHER RECHERCHENBERICHT

**0016953**
Nummer der Anmeldung

EP 80 10 0890

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | US - A - 3 638 227 (H.R. ANGEL)<br>* Spalte 8, Zeilen 6-44; Abbildung 6 *<br><br>-- | Einzige | G 01 N 15/00 |
| | FR - A - 2 097 763 (I.B.M.)<br>* Seite 53, Anspruch 1 *<br><br>-- | Einzige | |
| | US - A - 3 557 352 (W.R. HOGG)<br>* Seite 1, Zusammenfassung *<br><br>---- | Einzige | **RECHERCHIERTE SACHGEBIETE (Int. Cl. 3)**<br><br>G 01 N 15/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-06-1980 | DUCHATELLIER |

EPA form 1503.1   06.78